# EUROPÄISCHE PATENTSCHRIFT

(11) **EP 3 751 692 B1**
(45) Veröffentlichungstag und Bekanntmachung des Hinweises auf die Patenterteilung: **20.09.2023**
(21) Anmeldenummer: 19179406.4
(22) Anmeldetag: 11.06.2019
(51) Int. Cl.: H02J 3/38, H02J 3/36, H01F 30/04

(54) **HOCHSPANNUNGSGLEICHSTROMÜBERTRAGUNGSSTATION**
HIGH VOLTAGE DIRECT CURRENT POWER TRANSMISSION STATION
STATION DE TRANSMISSION DE COURANT CONTINU À HAUTE TENSION

(43) Veröffentlichungstag der Anmeldung: 16.12.2020
(73) Patentinhaber: Siemens Energy Global GmbH & Co. KG, 81739 München (DE)
(72) Erfinder: Broy, Alexander, 90768 Fürth (DE); Foehr, Matthias, 90579 Langenzenn (DE); Giering, Gerald Franz, 90562 Kalchreuth (DE); Halfmann, Ulrich, 91094 Langensendelbach (DE); Zeller, Marcus, 91056 Erlangen (DE)

(56) Entgegenhaltungen:
- EP-A1- 3 116 085
- EP-A1- 3 410 555
- WO-A1-2014/131457
- DE-A1-102017 215 821
- US-A1- 2018 302 011

## Beschreibung

Die vorliegende Erfindung betrifft eine Vorrichtung zur Vorbereitung einer Hochspannungsgleichstromübertragung, insbesondere für Installation auf See oder an Land, betrifft eine Umrichterstation und betrifft ferner ein Energiebereitstellungssystem, welches insbesondere mehrere Gruppen von Windturbinen aufweist.

Die von auf See bzw. auf dem Meeresgrund installierten Windturbinen gelieferte elektrische Leistung muss zur Verwendung von Verbrauchern, die an ein elektrisches Übertragungsnetz bzw. elektrisches Leistungsnetz angeschlossen sind, an Land übertragen werden.

Zur Übertragung kann zum Beispiel eine Hochspannungsgleichstromübertragung (HGÜ) verwendet werden. Dazu muss die in Form von Wechselspannung von den Windturbinen gelieferte Leistung auf geeignete höhere Spannung transformiert werden und ferner in Gleichspannung umgewandelt werden. Die Übertragung von Offshore-Windenergie durch HGÜ-Verbindungen erfordert herkömmlicherweise das Vorhandensein mehrerer Plattformen auf hoher See. Dabei werden neben der Plattform, die die Gleichrichterstation der HGÜ umfasst, weitere Plattformen (sogenannte Kollektorplattformen), die die Wechselspannung der Windturbinennetze auf eine höhere Spannung transformiert, um die Energie an die HGÜ-Plattform weiterzuleiten, benötigt. Dadurch ist ein komplexes System erfordert, welches - insbesondere durch die Vielzahl an Offshore-Plattformen erhebliche Kosten mit sich bringt.

Eine vergleichbare Aufgabenstellung findet sich in der Anbindung großer Photovoltaik-Parks oder anderer Erzeugungseinheiten an ein Verbrauchernetz.

Die Versorgung großer Lasten (Verbraucher) auf See, beispielsweise auf Öl- und Gasplattformen oder anderer Verbrauchereinheiten kann eine weitere Aufgabenstellung sein, die mit der vorliegenden Erfindung gelöst werden kann.

In der EP 3 410 555 A1 ist eine Anordnung zur Anbindung eines Windparks offenbart, bei der mehrere Turbinenstränge über jeweils eine eigene Sekundärwicklung mit einer Primärwicklung eines Zickzack-Transformators gekoppelt sind.

Es ist daher eine Aufgabe der vorliegenden Erfindung, eine Vorrichtung zur Vorbereitung einer Hochspannungsgleichstromübertragung, eine Umrichterstation bzw. ein Energiebereitstellungssystem zu schaffen, wobei die Komplexität der jeweiligen Systeme verringert ist und die erforderlichen Kosten ebenfalls verringert sind.

Gemäß einer Ausführungsform der vorliegenden Erfindung ist eine Vorrichtung zur Vorbereitung einer Hochspannungsgleichstromübertragung bereitgestellt, insbesondere für Installation auf See, aufweisend: eine erste Sammelschiene, die mit mehreren ersten Energieerzeugungs- oder Verbrauchereinheiten, insbesondere Windturbinen, verbindbar ist; eine zweite Sammelschiene, die mit mehreren zweiten Erzeugungs- oder Verbrauchereinheiten, insbesondere Windturbinen verbindbar ist; ein Transformatorsystem mit einer ersten Primär-Spule, die mit der ersten Sammelschiene verbindbar ist, einer zweiten Primär-Spule, die mit der zweiten Sammelschiene verbindbar ist, einem Sekundär-Spule-System, das mit der ersten Primär-Spule und der zweiten Primär-Spule induktiv gekoppelt ist, um auf der ersten und der zweiten Sammelschiene geführte Leistung auf erhöhte Wechselspannung zu transformieren; ein Umrichtersystem, das mit dem Sekundär-Spule-System verbunden ist, um die erhöhte Wechselspannung in Gleichspannung zur Hochspannungsgleichstromübertragung umzuformen.

Die Erzeugungseinheiten können z.B. regenerative Erzeugungseinheiten sein. Sie können kleine Leistung pro Einheit und/oder große räumliche Ausdehnung und/oder Kumulation zu einem zentralen Punkt für die Energie-zu- oder -ableitung, bspw. zur Fernübertragung mit HGÜ aufweisen. Die bei derartigen Netzen möglichen Problematiken wie (hohe) Fehlerströme, große Kabelkapazitäten und Ladeströme, möglicherweise erforderliche Kabelkompensation sowie Oberschwingungen können durch Aufteilung in mehrere Netzgruppen beherrscht werden.

Beispiele für Erzeugungseinheiten sind große Photovoltaik-Felder oder Windturbinen.

Beispiele für Verbrauchereinheiten sind Offshore-Plattformen beispielsweise für Öl- und Gasbohrungen, z.B. sogenannte Power-from-Shore-Anwendungen.

Die Sammelschienen können zum Beispiel als starre Leiter, etwa Kupferleiter, gas- oder feststoffisoliert ausgeführt sein. Je nachdem wie viele Gruppen von Erzeugungs- oder Verbrauchereinheiten vorhanden sind, können zwei oder mehr Sammelschienen vorgesehen sein. Eine Gruppe von Erzeugungs- oder Verbrauchereinheiten kann zum Beispiel durch einige oder alle Windturbinen eines Windparks definiert sein. Die jeweilige Gruppe von Erzeugungs- oder Verbrauchereinheiten kann zum Beispiel in einem abgegrenzten Bereich innerhalb eines Seegebietes installiert sein. Die Gruppen können jeweils so definiert sein, dass eine nominelle Gesamtleistung jeder der Gruppen innerhalb einer Abweichung von beispielsweise bis zu 40% oder bis zu 20 % oder bis zu 10% gleich ist. Die Sammelschienen können so ausgelegt sein, dass sie in der Lage sind, die nominelle Leistung der jeweils damit verbundenen Gruppe von Erzeugungs- oder Verbrauchereinheiten zu führen, bei gegebener, zum Beispiel nomineller, Spannung der Erzeugungs- oder Verbrauchereinheiten. Jede Sammelschiene kann zum Beispiel zum Führen eines Wechselstroms zwischen typischerweise 2000 Ampere und 4000 Ampere ausgebildet sein. Der gesamte von allen Sammelschienen der Vorrichtung geführte Strom kann zum Beispiel zwischen 3000 Ampere und 7000 Ampere liegen. Die ersten und/oder zweiten (und/oder jede Gruppe von weiteren) Windturbinen können zum Beispiel ihre Leistung mit einer Ausgangsspannung von zwischen zum Beispiel 30 kV und 145 kV an die jeweiligen Sammelschienen liefern.

Die jeweiligen Primär-Spulen können zum Beispiel über einen dazwischengeschalteten Schalter mit der dazugehörigen Sammelschiene verbindbar sein. Im Normalbetrieb können die verschiedenen Sammelschienen zum Beispiel elektrisch voneinander getrennt sein, könnten jedoch mit Hilfe geeigneter Schalter auch miteinander verbunden werden. Über diese zwischen zwei Sammelschienen angeordnete Schalter könnten dann ebenfalls verschiedene Primär-Spulen miteinander verbunden werden.

Das Transformatorsystem kann ein oder mehrere Transformatoren aufweisen. Die jeweilige Primär-Spule bezeichnet denjenigen Spulenabschnitt des Transformatorsystems (bzw. eines Transformators), welcher im Normalbetrieb die Leistung von der jeweiligen Gruppe von Erzeugungs- oder Verbrauchereinheiten führt. Das Sekundär-Spule-System bezeichnet denjenigen Abschnitt des Transformatorsystems (z.B. eines oder mehrerer Transformatoren), welcher induktiv mit den Primär-Spulen gekoppelt ist, um die Spannung auf der Primär-Spule-Seite auf eine (höhere) Spannung auf der Sekundär-Spule-Seite zu transformieren. Das Sekundär-Spule-System kann ein oder mehrere Sekundär-Spulen aufweisen. Jeder der Sekundär-Spulen kann mit einer oder mehr (z.B. zwei) Primärspulen induktiv gekoppelt sein. Die Bezeichnungen "Primär-Spule" bzw. "Sekundär-Spule" bzw. "Sekundär-Spule-System" werden somit lediglich zur jeweiligen Identifikation der jeweiligen Spule des Transformatorsystems verwendet, ohne notwendigerweise dadurch zu implizieren, dass verschiedene körperliche Merkmale der verschiedenen Spulen vorliegen.

Das Transformatorsystem kann genauso viele Transformatoren aufweisen, wie Sammelschienen vorhanden sind. Das Sekundär-Spule-System kann zum Beispiel genauso viele Sekundär-Spulen umfassen wie Primär-Spulen vorliegen. Gemäß dieser Ausführungsform ist genau eine Primär-Spule mit genau einer Sekundär-Spule induktiv gekoppelt (um jeweils einen Transformator zu bilden), ohne dass weitere Sekundär-Spulen mit der einen Primär-Spule induktiv gekoppelt sind.

In anderen Ausführungsformen kann das Transformatorsystem halb so viele Transformatoren aufweisen, wie Sammelschienen vorhanden sind. Das Sekundär-Spule-System umfasst dann weniger Sekundär-Spulen als Primär-Spulen, zum Beispiel halb so viele Sekundär-Spulen, wie Primär-Spulen vorhanden sind. In diesem Fall sind zum Beispiel zwei oder mehr Primär-Spulen mit einer einzigen Sekundär-Spule induktiv gekoppelt (um jeweils einen Transformator zu bilden).
Es sind auch Mischformen aus den beiden oben beschriebenen Ausführungsformen denkbar, um eine ungerade Anzahl an Sammelschienen zu erhalten.

Das Umrichtersystem kann eine Parallelschaltung von mehreren Umrichtern umfassen, um je nach Bedarf verschiedene Größen von Gesamtleistung zu bieten.

Die jeweiligen Gruppen von Erzeugungs- oder Verbrauchereinheiten können jeweils über ein entsprechendes Kabel von ihren Anschlüssen mit der jeweiligen Sammelschiene verbunden sein, ohne dass diese Verbindung über eine sogenannte Kollektorplattform erfolgt. Herkömmlicherweise wurden Kollektorplattformen verwendet, mit denen eine Gruppe von Windturbinen verbunden war. Die Kollektorplattform umfasst herkömmlicherweise einen Transformator, um die von den Windturbinen gelieferte Leistung eines bestimmten Spannungsniveaus auf höhere Spannung zu transformieren.

Gemäß einer bevorzugten Ausführungsform der vorliegenden Erfindung ist die Kollektorplattform nicht vorhanden. Somit kann die Komplexität der Vorrichtung sowie auch deren Kosten vermindert werden. Durch die beschriebene Ausführungsform kann in dem technischen Bereich von Offshore-Windenergie bei der Übertragung der Energie von den Windturbinen bis zum Land eine Spannungsebene und die dazugehörige Ausstattung (Kollektorplattformen und elektrotechnische Ausstattung) eingespart werden. Damit können die wesentlichen Aufgaben der Übertragungskette der elektrischen Energie in einer integrierten Station (beispielsweise der Vorrichtung zur Vorbereitung einer Hochspannungsgleichstromübertragung) gebündelt werden.

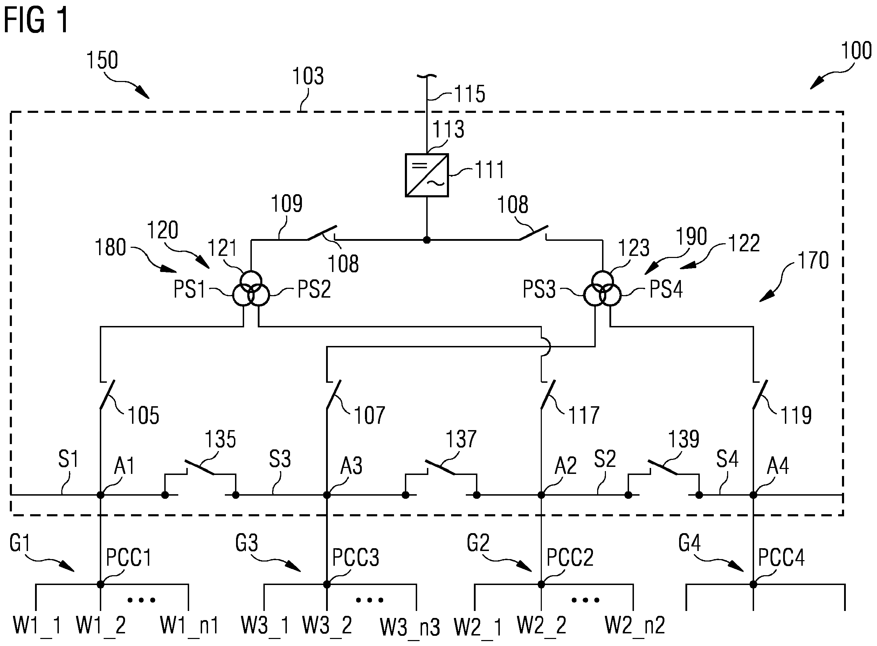

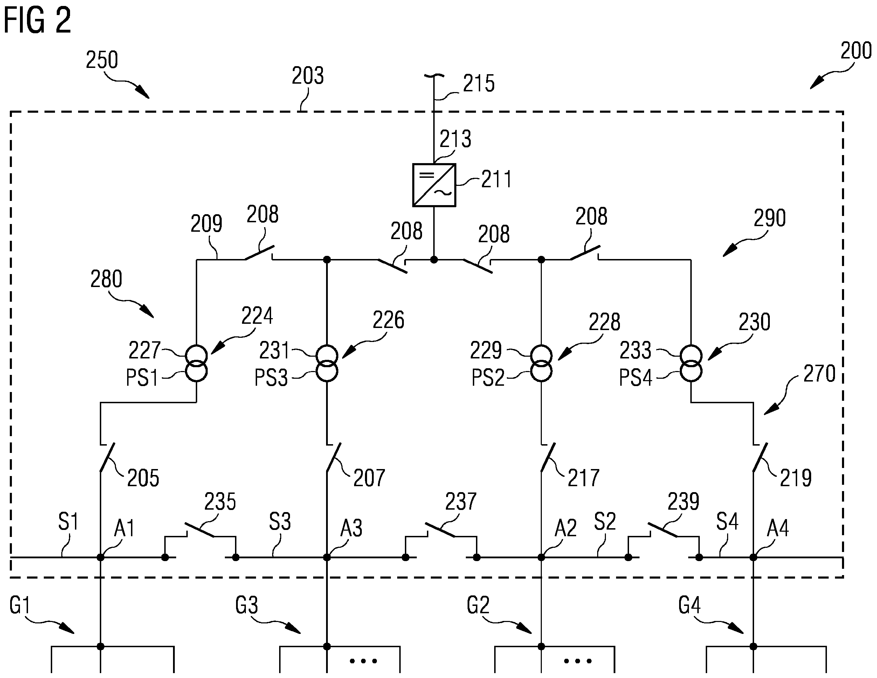

Gemäß einer Ausführungsform der vorliegenden Erfindung ist die Vorrichtung derart ausgebildet, dass das Sekundär-Spule-System (z.B. genau) eine Sekundär-Spule aufweist, die sowohl mit der ersten Primär-Spule als auch mit der zweiten Primär-Spule induktiv gekoppelt ist, wobei die Sekundär-Spule mit dem Gleichrichtersystem verbunden oder verbindbar ist. Die Primärspulen können entkoppelt sein, entweder durch hohe relative Kurzschlussspannung zwischen den Primärspulen (für die Ausführungsform wie in Fig. 1 dargestellt) oder durch separate Trafos (wie in Fig. 2 zu sehen).

Die induktive Kopplung kann über zum Beispiel ein Transformatorjoch aus ferromagnetischem oder weichmagnetischem oder weichmagnetisierbarem Material aufgebaut sein, umfassen. Ein von der jeweiligen Primär-Spule innerhalb des magnetisierbaren Materials erzeugtes magnetisches Feld kann sich innerhalb des magnetisierbaren Materials des Joches konzentrieren. Das magnetisierbare Material des Joches kann sich zum Beispiel innerhalb sowohl der jeweiligen Primär-Spule als auch der jeweiligen Sekundär-Spule befinden. Das magnetische Feld, welches sich in dem von der jeweiligen Sekundär-Spule umgebenden Material aufgrund des von der Primär-Spule induzierten oder erzeugten Feldes ausbildet, kann in der jeweiligen Sekundär-Spule eine (höhere) Spannung erzeugen.

Sind mehr als zwei Sammelschienen vorgesehen, zum Beispiel vier, sechs, acht oder eine andere gerade Anzahl, so können jeweils zwei der Primär-Spulen, die jeweils mit einer Sammelschiene verbunden sind, induktiv mit jeweils einer der Sekundär-Spule induktiv gekoppelt sein (um jeweils einen Transformator zu bilden). Die Anzahl (gleich der Anzahl der Transformatoren) der Sekundär-Spulen kann zum Beispiel die Hälfte der Anzahl der Primär-Spulen betragen. Die Anzahl der Primär-Spulen kann gleich der Anzahl der Sammelschienen sein.

In der beschriebenen Ausführungsform kann die Anzahl der erforderlichen Sekundär-Spulen bzw. Transformatoren vorteilhaft verringert werden, was Komplexität und Kosten sparen kann. Die Sekundär-Spule kann eine höhere Anzahl von Wicklungen aufweisen als jede der Primär-Spulen, zum Beispiel eine mindestens 2,5-fach so hohe Anzahl von Wicklungen wie die Primär-Spule.

Gemäß einer Ausführungsform der vorliegenden Erfindung weist das Sekundär-Spule-System auf: eine erste Sekundär-Spule, die mit der ersten Primär-Spule induktiv gekoppelt ist; eine zweite Sekundär-Spule, die mit der zweiten Primär-Spule induktiv gekoppelt ist, wobei insbesondere die ersten Sekundär-Spule und die zweite Sekundär-Spule mit dem Umrichtersystem verbunden oder verbindbar sind.

Gemäß dieser Ausführungsform kann die Anzahl der Sekundär-Spulen (auch bei mehr als zwei Sammelschienen) gleich der Anzahl der Primär-Spulen sein und auch gleich der Anzahl der Transformatoren sein. Insbesondere kann die erste Sekundär-Spule induktiv getrennt sein von der zweiten Primär-Spule und auch die zweite Sekundär-Spule kann induktiv getrennt sein von der ersten Primär-Spule.

Insbesondere können alle Sekundär-Spulen (ob gleiche Anzahl wie Primär-Spulen oder halbe Anzahl wie Primär-Spulen) gemeinsam mit dem Umrichtersystem verbunden sein oder verbindbar sein, beispielsweise über jeweilige Schalter.

Gemäß anderen Ausführungsformen der vorliegenden Erfindung können für jeweils drei oder noch mehr Primär-Spulen jeweils eine Sekundär-Spule vorgesehen sein, die mit diesen drei oder mehr Primär-Spulen induktiv verbunden ist (um einen Transformator zu bilden). Somit könnte die Anzahl von Sekundär-Spulen weiter vermindert werden.

Gemäß einer Ausführungsform der vorliegenden Erfindung weist die Vorrichtung ferner eine oder mehrere weitere Sammelschienen auf, die jeweils mit mehreren weiteren Erzeugungs- oder Verbrauchereinheiten verbindbar sind; wobei das Transformatorsystem ferner aufweist: für jede der einen oder der mehreren weiteren Sammelschienen eine weitere Primär-Spule, die jeweils mit einer der einen oder der mehreren Sammelschienen verbindbar ist; wobei das Sekundär-Spule-System mit allen weiteren Primär-Spulen induktiv gekoppelt ist.

Auch bei einer beliebigen Anzahl von weiteren Sammelschienen kann das Sekundär-Spule-System in analoger Weise wie oben für zwei Sammelschienen beschrieben, durch eine Anzahl von Sekundär-Spulen aufgebaut sein, wobei jeweils genau eine Sekundär-Spule mit genau einer Primär-Spule induktiv gekoppelt ist oder wobei mehrere der Primär-Spulen jeweils mit genau einer der Sekundär-Spulen induktiv gekoppelt sind.

Ausführungsformen gemäß der vorliegenden Erfindung unterstützen eine beliebige Anzahl von Sammelschienen, welche jeweils mit einer Primär-Spule gekoppelt sind. Das System ist somit skalierbar in Abhängigkeit der zu übertragenden Leistung.

Gemäß einer Ausführungsform der vorliegenden Erfindung ist die Vorrichtung derart ausgebildet, dass das Sekundär-Spule-System für mindestens zwei der weiteren Primär-Spulen insbesondere für jeweils zwei der weiteren Primär-Spulen genau jeweils eine weitere Sekundär-Spule aufweist, die mit den zwei der weiteren Primär-Spulen induktiv gekoppelt ist.

Gemäß einer Ausführungsform der vorliegenden Erfindung ist die Vorrichtung derart ausgebildet, dass das Sekundär-Spule-System für mindestens eine, insbesondere jede, der weiteren Primär-Spulen eine weitere Sekundär-Spule aufweist, die mit der mindestens einen der weiteren Primär-Spulen induktiv gekoppelt ist. Somit sind verschiedene Konfigurationen möglich.

Gemäß einer Ausführungsform der vorliegenden Erfindung hat das Transformatorsystem ein Übersetzungsverhältnis von zum Beispiel mindestens 2,5, insbesondere beispielsweise mindestens zwischen 2,5 und 5, insbesondere zum Beispiel zwischen 2,5 und 12. Damit ist eine Transformation auf eine Hochspannung ermöglicht, welche zur Hochspannungsgleichstromübertragung geeignet ist. Auf eine Kollektorplattform zwischen den Windturbinen und einer Umrichterstation kann somit verzichtet werden.

Gemäß der vorliegenden Erfindung weist die Vorrichtung ferner einen Schalter auf, über den die erste Sammelschiene mit der zweiten Sammelschiene verbindbar oder trennbar ist. Im Normalbetrieb kann über den Schalter die erste Sammelschiene getrennt sein von der zweiten Sammelschiene. Im Normalbetrieb können somit alle Sammelschienen zum Beispiel unabhängig voneinander betrieben werden und elektrisch getrennt voneinander sein. Im Falle eines Fehlerfalles (z.B. Nicht-Verfügbarkeit einer oder mehrerer Komponenten) könnte jedoch die erste Sammelschiene über den Schalter mit der zweiten Sammelschiene elektrisch verbunden sein. Somit ist eine größere Flexibilität der Zuordnung zwischen den Sammelschienen und den verschiedenen Primär-Spulen ermöglicht.

Gemäß einer Ausführungsform der vorliegenden Erfindung weist die Vorrichtung weitere Schalter auf, über die jede der einen oder der mehreren weiteren Sammelschienen verbindbar sind mit oder trennbar sind von jeder anderen der einen oder der mehreren weiteren Sammelschienen.

Gemäß einer Ausführungsform der vorliegenden Erfindung weist die Vorrichtung ferner auf: jeweils einen Schalter, über die die jeweilige Sammelschiene mit der jeweiligen Primär-Spule verbindbar bzw. von der jeweiligen Primär-Spule trennbar ist.

Wenn zum Beispiel ein Fehler in der mit dem Schalter verbundenen Primär-Spule auftritt, so kann dieser Schalter (und ggfs. weitere Schalter) geöffnet werden. Damit kann ein Weiterbetrieb auch bei teilweise beschädigten oder nicht funktionsfähigen Komponenten ermöglicht werden.

Gemäß einer Ausführungsform der vorliegenden Erfindung ist die Vorrichtung derart ausgestaltet, dass eine Spannung von zum Beispiel zwischen 30 kV bis 145 kV an die Sammelschienen anlegbar ist, wobei das Transformatorsystem ausgebildet ist, auf eine Spannung von beispielsweise zwischen 150 kV bis 525 kV zu transformieren. Damit werden konventionell erreichte elektrische Spannungen, die zum Beispiel für Offshore-Windenergieanlagen auftreten, unterstützt. Das Transformatorsystem kann insbesondere ausgebildet sein, zwischen einer Spannung von 66 kV bis 380 kV zu transformieren. Damit kann auf eine oder mehrere Kollektorplattform(en) zwischen den Windenergieanlagen und der Umrichterstation / HGÜ-Offshore-Plattform verzichtet werden.

Gemäß einer Ausführungsform der vorliegenden Erfindung weist die Vorrichtung ferner auf: eine Schaltersteuerung, um Schalter betrieblich oder im Fehlerfall einer Komponente und/oder im Teillastbetrieb zu schalten, um die fehlerhafte Komponente und/oder Teile des Systems von dem Rest des Systems elektrisch zu trennen und/oder nicht-fehlerbehaftete Komponenten miteinander zu verbinden. Damit kann das System auch im Teillastbereich oder bei Funktionsuntüchtigkeit oder eingeschränkter Funktionsfähigkeit von einer oder mehreren Komponenten durch entsprechende Schaltung der Schalter weiterbetrieben werden.

Gemäß einer Ausführungsform der vorliegenden Erfindung ist eine Umrichterstation bereitgestellt, aufweisend: eine Vorrichtung gemäß einer der vorangehenden Ausführungsformen; ein Gehäuse, in dem die Vorrichtung aufgenommen ist; und insbesondere eine Meeresgrundverankerung, um auf See das Gehäuse oberhalb der Wasseroberfläche im Meeresgrund zu verankern; oder ein Schwimmgerät, das das Gehäuse trägt.

In dem Gehäuse können sowohl alle Sammelschienen, alle Transformatoren (alle Primär-Spulen des Transformatorsystems und auch das gesamte Sekundär-Spule-System des Transformatorsystems) enthalten sein. Die Umrichterstation ist somit verschieden von einem System aus einer oder mehreren Kollektorplattform(en), die räumlich getrennt sind von einer Umrichterstation, wie sie herkömmlicherweise verwendet wurden.

Gemäß einer anderen Ausführungsform der vorliegenden Erfindung sind die Komponenten der Vorrichtung, also im Wesentlichen Sammelschienen, Schalter und Transformatoren gemäß einer der vorangehenden Ausführungsformen in Freiluft ohne Gehäuse aufgestellt.

Gemäß einer Ausführungsform der vorliegenden Erfindung ist bereitgestellt ein Energiebereitstellungssystem, aufweisend: mehrere Gruppen von Windturbinen; eine Umrichterstation gemäß der vorangehenden Ausführungsform, wobei jede Gruppe der Windturbinen mit einer Sammelschiene der Umrichterstation (direkt) verbunden ist, wobei die von der Gruppe der Windturbinen anliegende bzw. ausgegebene Spannung bis auf Verluste der Spannung gleicht, die an der Sammelschiene anliegt. Eine Transformation der Spannung zwischen einem Ausgangsanschluss der Windturbinen und der jeweiligen Sammelschiene ist entbehrlich.

Ausführungsformen der vorliegenden Erfindung werden nun mit Bezug auf die beiliegenden Zeichnungen erläutert. Die Erfindung ist nicht auf die illustrierten oder beschriebenen Ausführungsformen beschränkt.
Fig. 1 illustriert in schematischer Übersicht eine Umrichterstation gemäß einer Ausführungsform der vorliegenden Erfindung und die Anschlüsse für mehrere Gruppen von Erzeugungs- oder Verbrauchereinheiten, um ein Energiebereitstellungssystem gemäß einer Ausführungsform der vorliegenden Erfindung zu bilden;
Fig. 2 illustriert in schematischer Übersicht eine Umrichterstation gemäß einer anderen Ausführungsform der vorliegenden Erfindung und mehrere Gruppen von Erzeugungs- oder Verbrauchereinheiten, um ein Energiebereitstellungssystem gemäß einer anderen Ausführungsform der vorliegenden Erfindung zu bilden;
Fig. 3 illustriert in vereinfachter Darstellung ein Energiebereitstellungssystem gemäß einer Ausführungsform der vorliegenden Erfindung; und
Fig. 4 zeigt in vereinfachter Darstellung ein Energiebereitstellungssystem gemäß dem Stand der Technik.

Das Energiebereitstellungssystem 100, welches schematisch in Fig. 1 illustriert ist, weist mehrere Gruppen G1, G2, G3, G4 von Windturbinen-Gruppen auf, nämlich WT1_1, WT1_2, WT1_3, ..., WT1_n1; W2_1, W2_2, ..., W2_n2; W3_1, W3_2, ..., W3_n3 und W4_1, W4_2, ..., W4_n4 auf. Eine erste Gruppe G1 ist dabei durch die Windturbinen-Gruppen W1_1, W1_2, ..., W1_n gebildet. Eine zweite Gruppe G2 ist durch die Windturbine-Gruppen W2_1, W2 _2, ..., W2_n2 gebildet.

Jede Gruppe WTx_y kann aus einer oder (als WTG-String) aus mehreren Windturbinen bestehen.

Ferner weist das Energiebereitstellungssystem 100 eine Umrichterstation 150 gemäß einer Ausführungsform der vorliegenden Erfindung auf, wobei jede Gruppe G1, G2, G3, G4 mit einer jeweiligen Sammelschiene S1, S2, S3, S4 (insbesondere direkt) verbunden ist.

Die von der Gruppe von Windturbinen anliegende bzw. ausgegebene Spannung gleicht bis auf Verluste der Spannung, die an der Sammelschiene anliegt. Insbesondere sind die jeweiligen Knoten PPC1, PPC2, PPC3, PPC4, an denen jeweils die erste Gruppe G1 von Windturbinen, die zweite Gruppe G2, die dritte Gruppe G3 bzw. die vierte Gruppe G4 von Windturbinen verbunden ist, ohne dazwischengeschalteten Transformator mit den Anschlusspunkten A1, A2, A3, A4, die jeweils mit den Sammelschienen S1, S2, S3, S4 verbunden sind, verbunden.

Die Umrichterstation 150 weist eine Vorrichtung 170 zur Vorbereitung einer Hochspannungsgleichstromübertragung gemäß einer Ausführungsform der vorliegenden Erfindung auf, sowie insbesondere ein Gehäuse 103, in dem die Vorrichtung 170 aufgenommen ist. Das Gehäuse 103 kann insbesondere über eine nicht-illustrierte Meeresgrundverankerung mit dem Meeresgrund verankert sein, so dass sich das Gehäuse 103 oberhalb der Meeresoberfläche befindet.

Die Vorrichtung 170 zur Vorbereitung einer Hochspannungsgleichstromübertragung weist eine erste Sammelschiene S1 auf, die mit der Gruppe G1 von Windturbinen WT1_1, WT1_2, ..., WT1_n1 verbunden ist. Die Vorrichtung 170 weist ferner eine zweite Sammelschiene S2 auf, die mit einer zweiten Gruppe G2 von zweiten Windturbinen W2_1, W2_2, ..., W2_n2 verbunden ist. Ferner weist die Vorrichtung 170 eine dritte Sammelschiene S3 und eine vierte Sammelschiene S4 auf, die mit der dritten Gruppe G3 bzw. der vierten Gruppe G4 von Windturbinen verbunden ist.

Die Vorrichtung 170 weist ferner ein Transformatorsystem 180 auf mit einer ersten Primär-Spule PS1, welche mit der ersten Sammelschiene S1 über einen Schalter 105 verbindbar ist. Das Transformatorsystem 180 weist ferner eine zweite Primär-Spule PS2 auf, die mit der zweiten Sammelschiene S2 über einen Schalter 117 verbindbar ist.

Das Transformatorsystem 180 weist ferner ein Sekundär-Spule-System 121 auf, das mit der ersten Primär-Spule PS1 und der zweiten Primär-Spule PS2 induktiv gekoppelt ist, um auf der ersten und der zweiten Sammelschiene S1, S2 geführte Spannung auf erhöhte Wechselspannung an einer Sekundär-Ausgangsschiene 109 zu transformieren. Die Primär-Spulen PS1 und PS2 sind soweit wie möglich voneinander entkoppelt. Über (optionale) (z.B. unabhängig voneinander schaltbare) Schalter 108 sind die Sekundärspulen 121, 123 mit dem Umrichtersystem 111 verbindbar bzw. von diesem trennbar.
Die Vorrichtung 170 weist ferner ein Umrichtersystem 111 auf, das mit dem Sekundär-Spule-System 190,121, 123, insbesondere mit der Sekundär-Schiene 109, verbunden ist, um die erhöhte Wechselspannung in Gleichspannung an einem Ausgangsanschluss 113 des Umrichtersystems 111 zur Hochspannungsgleichstromübertragung entlang einer Gleichstromübertragungsleitung (Kabel und / oder Freileitung) 115 umzuformen.

Über Schalter 107, 119 ist die dritte Sammelschiene S3 mit einer dritten Primär-Spule PS3 verbindbar bzw. ist die vierte Sammelschiene S4 mit einer vierten Primär-Spule PS4 verbindbar. Der die Spulen PS3, PS4 und 123 umfassende Transformator 122 wird unten genauer beschrieben.

Elemente, welche sich in Struktur und/oder Funktion in den Fig. 1 und 2 ähneln oder gleichen, sind mit Bezugszeichen bezeichnet, welche sich lediglich in der ersten Ziffer unterscheiden. Eine Beschreibung eines Elements, welches mit Bezug auf eine bestimmte Ausführungsform nicht im Detail beschrieben wurden, kann der Beschreibung dieses Elements mit Bezug auf eine andere Ausführungsform entnommen werden.

Fig. 1 und 2 illustrieren zwei Vorrichtungen 170 bzw. 270, welche in einer Umrichterstation 150 bzw. 250 eines Energiebereitstellungssystems 100 bzw. 200 umfasst sind, welches sich in der Ausgestaltung des jeweiligen Transformatorsystems 180 bzw. 280 unterscheiden.

In der in Fig. 1 illustrierten Ausführungsform weist das Sekundär-Spule-System 190 eine Sekundär-Spule 121 auf, die sowohl mit der ersten Primär-Spule PS1 als auch mit der zweiten Primär-Spule PS2 induktiv gekoppelt ist, um Transformator 120 zu bilden. Die beiden Primär-Spulen PS1 und PS2 sind durch die Transformatorbauart und Wahl einer großen relativen Kurzschlussspannung zwischen diesen beiden Wicklungen soweit wie möglich voneinander entkoppelt.

Ferner ist die dritte Primär-Spule PS3 und auch die vierte Primär-Spule PS4 mit einer weiteren Sekundär-Spule 123 induktiv verbunden, um Transformator 122 zu bilden. Die Sekundär-Spule-Ausgänge der Sekundär-Spulen 121, 123 sind gemeinsam mit der Sekundär-Sammelschiene 109 verbunden und somit auch mit dem Umrichtersystem 111. In der Sekundär-Sammelschiene 109 kann für jeden Zweig (d.h. zu jeder Sekundär-Spule 121, 123 hin) ein Schalter 108vorgesehen sein.

Der Transformator 120 umfasst die Primär-Spulen PS1, PS2, welche mit der Sekundär-Spule 121 induktiv gekoppelt sind. Der Transformator 122 umfasst die Primär-Spulen PS3, PS4, die mit der Sekundär-Spule 123 induktiv gekoppelt sind.

In der in Fig. 2 in ähnlicher Weise schematisch dargestellten Ausführungsform 200 eines Energiebereitstellungssystems gemäß einer Ausführungsform der vorliegenden Erfindung ist das Transformatorsystem 280 hinsichtlich der Primär- bzw. Sekundär-Spulen anders ausgeführt. Das Transformatorsystem 280 umfasst dabei eine erste Sekundär-Spule 227, welche mit der ersten Primär-Spule PS1 induktiv gekoppelt ist (um Transformator 224 zu bilden), und umfasst ferner eine zweite Sekundär-Spule 229, die mit der zweiten Primär-Spule PS2 induktiv gekoppelt ist (um Transformator 228 zu bilden).

Das Transformatorsystem 280 der in Fig. 2 illustrierten Ausführungsform umfasst die Transformatoren 224, welcher Primär-Spule PS1 und Sekundär-Spule 227 umfasst, Transformator 226, der Primär-Spule PS3 und Sekundär-Spule 231 umfasst, Transformator 228, der Primär-Spule PS2 und Sekundär-Spule 229 aufweist, sowie den Transformator 230, der die Primär-Spule PS4 sowie Sekundär-Spule 233 umfasst.

Sowohl die erste Sekundär-Spule 227 als auch die zweite Sekundär-Spule 229 (sowie auch die Sekundär-Spule 231, 233) sind mit dem Umrichtersystem 211 über eine Sekundär-Sammelschiene 209 (optional über einen oder mehrere, z.B. unabhängig voneinander schaltbare, Schalter 208) verbunden bzw. verbindbar. Für jede weitere Primär-Spule, z.B. Primär-Spule PS3, PS4, weist das Transformatorsystem 280 der in Fig. 2 illustrierten Ausführungsform eine zugeordnete Sekundär-Spule 231 bzw. 233 auf, die mit der jeweiligen Primär-Spule PS3 bzw. PS4 induktiv gekoppelt ist.

Die in Fig. 1 und 2 illustrierten Ausführungsformen können auf beliebig viele Sammelschienen mit zugeordneten Primär-Spulen erweitert werden. Dabei muss nicht mit jeder Primär-Spule genau eine Sekundär-Spule induktiv gekoppelt sein oder es müssen auch nicht genau zwei (oder mehrere) Primär-Spulen mit genau einer Sekundär-Spule induktiv gekoppelt sein, sondern es kann auch eine Konfiguration vorliegen, wobei einige der Primär-Spulen mit genau einer Sekundär-Spule gekoppelt sind und zwei oder mehr der Primär-Spulen mit jeweils einer Sekundär-Spule gekoppelt sind.

In den in Fig. 1 und 2 illustrierten Ausführungsformen können die einzelnen Sammelschienen paarweise durch jeweilige (optionale) Schalter 135, 137, 139 wahlweise verbunden oder voneinander getrennt werden. Die Sammelschienen (bzw. Anschlusspunkte A1, A2, A3, A4) können auch (optional) über Schalter ringförmig verbunden bzw. verbindbar sein. Z.B. können Anschlusspunkte A1, A4 über einen (nicht dargestellten) Schalter verbindbar sein.

Die in Fig. 1 und 2 nur schematisch illustrierten Umrichtersysteme 111, 211 können einen oder mehrere AC-DC-Konverter aufweisen, die parallel mit der Sekundär-Sammelschiene 109 bzw. 209 verbunden sind, mit der auch alle Sekundär-Spulen verbunden bzw. verbindbar sind.

Die Vorrichtungen 100 bzw. 200 können auch eine nicht-illustrierte Schaltersteuerung aufweisen, um die (teilweise optionalen) Schalter 105, 107, 117, 119, 135, 137, 139 im Fehlerfall einer Komponente oder/und einem Teillastbereich zu schalten, um die fehlerhafte Komponente und/oder Teile des Systems von dem Rest des Systems elektrisch zu trennen und/oder nicht-fehlerbehaftete Komponenten miteinander zu verbinden.

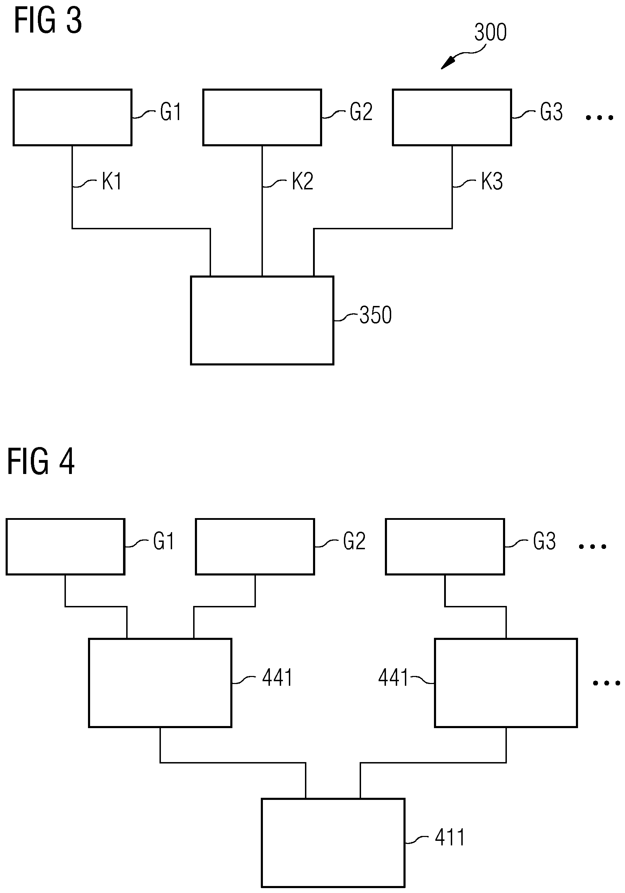

Fig. 3 zeigt in vereinfachter, schematischer Darstellung ein Energiebereitstellungssystem 300 gemäß einer Ausführungsform der vorliegenden Erfindung, welches mehrere Gruppen G1, G2, G3 von Erzeugungs- oder Verbrauchereinheiten umfasst sowie eine Umrichterstation 350 gemäß einer Ausführungsform der vorliegenden Erfindung, welche ähnlich ausgestaltet sein kann, wie die Umrichterstation 150, 250, die in Fig. 1 bzw. Fig. 2 illustriert sind.

Die Länge der Zuleitungskabel K1, K2, K3 zwischen den Gruppen G1, G2 und G3 von Erzeugungs- oder Verbrauchereinheiten und der Umrichterstation 350 kann zum Beispiel zwischen 1 km und 15 km betragen.

Durch den direkten, parallelen Betrieb von zwei oder mehr Transformatoren 120, 122 bzw. 224, 226, 228, 230 mit einem Hochspannungsumrichter 111, 211 kann eine weitere Spannungsanpassung auf den Kollektorplattformen oder -stationen 441 (wie in Fig. 4 für den Stand der Technik illustriert ist) überflüssig werden.

Die Einsparung der Kollektorplattform ist ermöglicht, da die direkt aus den Erzeugungs- oder Verbrauchereinheitengespeiste AC-Mittelspannung in einem Schritt auf eine für den HGÜ-Stromrichter notwendige AC-Hochspannung transformiert werden kann gemäß Ausführungsformen der vorliegenden Erfindung.

Die an der integrierten Plattform oder Station (z.B. Umrichterstation 150 oder 250, die in Fig. 1 bzw. Fig. 2 illustriert sind) angeschlossenen Erzeugungs- oder Verbrauchereinheitensind nicht an einer einzigen Sammelschiene verbunden, sondern je nach Gruppierung der angeschlossenen Erzeugungs- oder Verbrauchereinheiten auf mehrere Sammelschienenabschnitte bzw. Sammelschienen S1, S2, S3, S4 aufgeteilt und getrennt voneinander. Die Separierung der einzelnen Sammelschienen kann wie folgt charakterisiert sein:
- Jeder Gruppe von Erzeugungs- oder Verbrauchereinheiten kann einen eigenen Sammelschienenabschnitt bzw. Anschluss (z.B. A1, A2, A3, A4) besitzen.
- Jeder Sammelschienenabschnitt bzw. jede Sammelschiene kann einen eigenen Transformatorabgang besitzen und kann im Normalbetrieb mit diesem verbunden sein.
- Von diesen Sammelschienenabschnitten bzw. Sammelschienen können jeweils zwei oder mehrere durch schaltbare Elemente elektrisch miteinander verbunden werden.

Durch die teilweise oder vollständige Separierung der Sammelschienen (z.B. S1, S2, S3, S4) im Betrieb können zum Beispiel in Fehlerfällen die Auswirkungen auf das restliche elektrische System reduziert werden. In Situationen, in denen Teilsysteme (z.B. Transformatoreinheiten) ausgefallen sind, gewartet werden oder sich im Teillastbetrieb befinden, kann durch gezielte Kopplung der verschiedenen Sammelschienen (z.B. S1, S2, S3, S4) ein Weiterbetrieb, der des Energiebereitstellungssystems gewährleistet werden.

Fig. 4 zeigt in einer schematischen Ansicht ein herkömmliches Energiebereitstellungssystem, wobei zwischen den Gruppen G1, G2, G3 von Erzeugungs- oder Verbrauchereinheiten und dem Umrichtersystem 411 jeweils Kollektorplattformen oder - stationen 441 angeordnet sind, welche auf eine höhere Spannung transformieren. Auf diese Kollektorplattformen oder - stationen 441 kann gemäß Ausführungsformen der vorliegenden Erfindung verzichtet werden.

Die Vorrichtung zur Vorbereitung einer HGÜ kann ein Regelungssystem aufweisen, das ausgebildet ist:
a) die Wechselspannung der Sammelschiene 109 nach Betrag, Frequenz (und Phasenlage) zu regeln, ohne dass eine weitere Impedanz zwischen Transformator und Stromrichter 111 bzw. 211 (z.B. durch äußere Beschaltung) wirksam ist;
b) die Regelung der Wirkleistung bzw. deren Begrenzung sowie der Blindleistung durch Vorgaben für jede Sammelschiene S1 bis S4 (bzw. der damit korrespondieren Primärspulen) durchzuführen.

Das Regelungssystem kann durch mehrere physikalisch getrennte Regelsysteme gebildet sein, z.B. aufweisend:
einen Umrichter für die Spannungsregelung an der Sammelschiene 109;
eine Windpark- oder PV-Parkregelung oder Lastmanagement für Blindleistungsregelung und ggfs. Wirkleistungsbegrenzung.

Eine für alle angeschlossenen Erzeugungs- oder Verbrauchereinheitengültige Begrenzung der Wirkleistung kann durch Vorgabe der Frequenz der Wechselspannung an der Sammelschiene 109 durch den Stromrichter erreicht werden, wenn die Erzeugungs- oder Verbrauchereinheiten entsprechende Einrichtungen besitzen, die nach den relevanten Grid-Codes gefordert sind.

Die Sternpunktbehandlung der durch die jeweiligen Primärspulen definierten Teilnetze kann bevorzugt über Sternpunkte der im Stern geschalteten Primärspulen erfolgen; alternativ kann die Sternpunktbehandlung über separate Geräte beispielsweise an den jeweiligen Sammelschienen, an jedem einzelnen Stringabgang oder in einer Erzeugungs- oder Verbrauchereinheit je String erfolgen.

Die Kompensation der Kabelkapazitäten kann auch über separate Geräte (Drosseln) pro Sammelschiene oder pro String oder an der Erzeugungs- oder Verbrauchereinheit erfolgen.

## Patentansprüche

1. Vorrichtung (170, 270) zur Vorbereitung einer Hochspannungsgleichstromübertragung, insbesondere für Installation auf See, aufweisend:
eine erste Sammelschiene (S1), die mit mehreren ersten Energieerzeugungs- oder Verbrauchereinheiten, insbesondere Windturbinen (G1; w1_1, w1_2, ..., w1_n1), verbindbar ist;
eine zweite Sammelschiene (S2), die mit mehreren zweiten Energieerzeugungs- oder Verbrauchereinheiten, insbesondere Windturbinen (G2; w2_1, w2_2, ..., w2_n2), verbindbar ist;
ein Transformatorsystem (180, 280) mit:
einer ersten Primär-Spule (PS1), die mit der ersten Sammelschiene (S1) verbindbar ist,
einer zweiten Primär-Spule (PS2), die mit der zweiten Sammelschiene (S2) verbindbar ist,
einem Sekundär-Spule-System (190, 290), das mit der ersten Primär-Spule (PS1) und der zweiten Primär-Spule (PS2) induktiv gekoppelt ist, um auf der ersten und der zweiten Sammelschiene (S1, S2) geführte Leistung auf erhöhte Wechselspannung zu transformieren;
ein Umrichtersystem (111, 211), das mit dem Sekundär-Spule-System (190, 290) verbunden ist, um die erhöhte Wechselspannung in Gleichspannung zur Hochspannungsgleichstromübertragung umzuformen, wobei die Vorrichtung ferner einen Schalter (135) aufweist, über den die erste Sammelschiene (S1) mit der zweiten Sammelschiene (S2) verbindbar oder trennbar ist, und der derart ausgestaltet ist, dass in einem Normalbetrieb der Vorrichtung mittels des Schalters die erste Sammelschiene von der zweiten Sammelschiene getrennt ist.

2. Vorrichtung gemäß dem vorangehenden Anspruch, wobei das Sekundär-Spule-System (190) eine Sekundär-Spule (121) aufweist, die sowohl mit der ersten Primär-Spule (PS1) als auch mit der zweiten Primär-Spule (PS2) induktiv gekoppelt ist,
wobei die Sekundär-Spule (121) mit dem Umrichtersystem (111) verbunden oder verbindbar ist.

3. Vorrichtung gemäß Anspruch 1, wobei das Sekundär-Spule-System (290) aufweist:
eine erste Sekundär-Spule (227), die mit der ersten Primär-Spule (PS1) induktiv gekoppelt ist;
eine zweite Sekundär-Spule (229), die mit der zweiten Primär-Spule (PS2) induktiv gekoppelt ist
wobei die erste Sekundär-Spule (227) und die zweite Sekundär-Spule (229) mit dem Umrichtersystem (211) verbunden
oder verbindbar sind.

4. Vorrichtung gemäß einem der vorangehenden Ansprüche, ferner aufweisend:
eine oder mehrere weitere Sammelschienen (S3, S4), die jeweils mit mehreren weiteren Energieerzeugungseinheiten (G3, G4) verbindbar sind; wobei das Transformatorsystem (180, 280 ) ferner aufweist:
für jede der einen oder der mehreren weiteren Sammelschienen eine weitere Primär-Spule (PS3, PS4), die jeweils mit einer der einen oder der mehreren Sammelschienen (S3, S4) verbindbar ist;
wobei das Sekundär-Spule-System (190, 290 ) mit allen weiteren Primär-Spulen induktiv gekoppelt ist.

5. Vorrichtung gemäß einem der vorangehenden Ansprüche, wobei das Sekundär-Spule-System für mindestens zwei der weiteren Primär-Spulen (PS3, PS4) insbesondere für jeweils zwei der weiteren Primär-Spulen genau jeweils eine weitere Sekundär-Spule (123) aufweist, die mit den zwei der weiteren Primär-Spulen induktiv gekoppelt ist.

6. Vorrichtung gemäß einem vorangehenden Ansprüche 1 bis 5, wobei das Sekundär-Spule-System für mindestens eine, insbesondere jede, der weiteren Primär-Spulen (PS3, PS4) eine weitere Sekundär-Spule (231, 233) aufweist, die mit der mindestens einen der weiteren Primär-Spulen induktiv gekoppelt ist.

7. Vorrichtung gemäß Anspruch 2, wobei die erste Primär-Spule (PS1) und die zweite Primär-Spule (PS2) untereinander definierte induktive Kopplungseigenschaften aufweisen, wobei die Werte für die relative Kurzschlussspannung bevorzugt im Bereich von 30% bis 60% liegen.

8. Vorrichtung gemäß Anspruch 2, wobei die erste Primär-Spule (PS1) und die zweite Primär-Spule (PS2) untereinander definierte induktive Kopplungseigenschaften aufweisen,
wobei ein Verhältnis der relativen Kurzschlussspannung zwischen den der ersten Primär-Spule (PS1) und der zweiten Primär-Spule (PS2) einerseits und der relativen Kurzschlussspannung zwischen der Sekundärspule (121) und der jeweiligen Primärspule (PS1 oder PS2) andererseits 1,5 bis 3 beträgt.

9. Vorrichtung gemäß einem der vorangehenden Ansprüche, wobei das Transformatorsystem (180, 280) ein Übersetzungsverhältnis von mindestens 2,5 aufweist, insbesondere mindestens zwischen 2,5 und 5, insbesondere zwischen 2,5 und 12.

10. Vorrichtung gemäß einem der vorangehenden Ansprüche, ferner aufweisend:
zumindest einen weiteren Schalter (137, 139, 237, 239), über den eine oder jede der einen oder der mehreren weiteren Sammelschienen paarweise verbindbar sind mit oder paarweise trennbar sind von einer oder jeder anderen der einen oder der mehreren weiteren Sammelschienen; und/oder
zumindest einen sekundärseitigen Schalter (108, 208), über den eine oder mehrere der Sekundärspulen des Sekundär-Spule-Systems mit dem Umrichtersystem verbindbar ist bzw. von dem Umrichtersystem trennbar ist.

11. Vorrichtung gemäß einem der vorangehenden Ansprüche, ferner aufweisend:
jeweils einen Schalter (105, 107, 117, 119, 205, 207, 217, 219), über die die jeweilige Sammelschiene mit der jeweiligen Primär-Spule verbindbar bzw. von der jeweiligen Primär-Spule trennbar ist.

12. Vorrichtung gemäß einem der vorangehenden Ansprüche, wobei eine Spannung von zwischen 30 kV bis 145 kV an die Sammelschienen anlegbar ist,
wobei das Transformatorsystem (180, 280) ausgebildet ist, auf eine Spannung von zwischen 150 kV bis 400 kV zu transformieren.

13. Vorrichtung gemäß einem der vorangehenden Ansprüche, wobei das Umrichtersystem (111, 211) einen oder mehrere AC-DC-Konverter aufweist, die parallel mit einer Sekundärsammelschiene (109, 209) verbunden sind, mit der auch alle Sekundär-Spulen (121, 123, 227, 231, 229, 233) verbunden sind.

14. Vorrichtung gemäß einem der vorangehenden Ansprüche, ferner aufweisend:
eine Schaltersteuerung, um Schalter im Fehlerfall einer Komponente und/oder im Teillastbetrieb zu schalten, um die fehlerhafte Komponente und/oder Teile des Systems von dem Rest des Systems elektrisch zu trennen und/oder nicht-fehlerbehaftete Komponenten miteinander zu verbinden.

15. Umrichterstation (150, 250), aufweisend:
eine Vorrichtung (170, 270) gemäß einem der vorangehenden Ansprüche;
ein Gehäuse (103, 203), in dem die Vorrichtung aufgenommen ist;
insbesondere eine Meeresgrundverankerung, um auf See das Gehäuse oberhalb der Wasseroberfläche im Meeresgrund zu verankern, oder insbesondere ein Schwimmgerät, welches das Gehäuse trägt.

16. Energiebereitstellungssystem (100, 200), aufweisend:
mehrere Gruppen (G1, G2, G3, G4) von Energieerzeugungs- oder Verbrauchseinheiten;
eine Umrichterstation (150, 250) gemäß dem vorangehenden Anspruch,
wobei jede Gruppe der Energieerzeugungs- oder Verbrauchseinheiten mit einer Sammelschiene der Umrichterstation (direkt) verbunden ist,
wobei die von der Gruppe (G1, G2, G3, G4) der Energieerzeugungs- oder Verbrauchseinheiten anliegende bzw. ausgegebene Spannung bis auf Verluste der Spannung gleicht, die an der Sammelschiene anliegt.

17. Vorrichtung gemäß einem der vorangehenden Ansprüche 1 bis 14, welche ausgebildet ist:
a) die Wechselspannung einer Sekundärsammelschiene (209) nach Betrag und/oder Frequenz und/oder Phasenlage zu regeln, ohne dass eine weitere Impedanz zwischen dem Transformatorsystem (180, 280) und Umrichtersystem (111, 211) wirksam ist; und/oder
b) die Regelung der Wirkleistung bzw. deren Begrenzung sowie der Blindleistung durch Vorgaben für jede Sammelschiene (S1 bis S4) bzw. der damit korrespondieren Primärspulen durchzuführen; und/oder
c) eine für die gesamte angeschlossene Wirkleistung gültige Begrenzung durch Vorgabe der Frequenz der Wechselspannung an der Sekundärsammelschiene (109, 209) durch den Umrichter (111, 211) durchzuführen.

## Claims

1. Device (170, 270) for preparing a high-voltage direct current transmission, in particular for installation at sea, comprising:
a first busbar (S1), which is connectable to a plurality of first energy generation or consumer units, in particular wind turbines (G1; w1_1, w1_2, ..., w1_n1);
a second busbar (S2), which is connectable to a plurality of second energy generation or consumer units, in particular wind turbines (G2; w2_1, w2_2, ..., w2_n2);
a transformer system (180, 280) having:
a first primary coil (PS1), which is connectable to the first busbar (S1),
a second primary coil (PS2), which is connectable to the second busbar (S2),
a secondary coil system (190, 290), which is inductively coupled to the first primary coil (PS1) and the second primary coil (PS2) in order to transform power routed on the first and second busbars (S1, S2) to increased AC voltage;
a converter system (111, 211), which is connected to the secondary coil system (190, 290) in order to convert the increased AC voltage into DC voltage for the high-voltage direct current transmission, wherein the device furthermore comprises a switch (135), via which the first busbar (S1) is connectable to or disconnectable from the second busbar (S2), and which is configured in such a way that, during normal operation of the device, the first busbar is disconnected from the second busbar by means of the switch.

2. Device according to the preceding claim, wherein the secondary coil system (190) comprises a secondary coil (121), which is inductively coupled both to the first primary coil (PS1) and to the second primary coil (PS2),
wherein the secondary coil (121) is connected or connectable to the converter system (111).

3. Device according to Claim 1, wherein the secondary coil system (290) comprises:
a first secondary coil (227), which is inductively coupled to the first primary coil (PS1);
a second secondary coil (229), which is inductively coupled to the second primary coil (PS2),
wherein the first secondary coil (227) and the second secondary coil (229) are connected or connectable to the converter system (211).

4. Device according to any of the preceding claims, furthermore comprising:
one or a plurality of further busbars (S3, S4), which is/are respectively connectable to a plurality of further energy generation units (G3, G4);
wherein the transformer system (180, 280) furthermore comprises:
a further primary coil (PS3, PS4) for each of the one or the plurality of further busbars, said further primary coil being respectively connectable to one of the one or the plurality of busbars (S3, S4);
wherein the secondary coil system (190, 290) is inductively coupled to all further primary coils.

5. Device according to any of the preceding claims, wherein the secondary coil system comprises exactly one further secondary coil (123) in each case for at least two of the further primary coils (PS3, PS4), in particular for in each case two of the further primary coils, said further secondary coil being inductively coupled to the two of the further primary coils.

6. Device according to any of the preceding Claims 1 to 5, wherein the secondary coil system comprises a further secondary coil (231, 233) for at least one, in particular each, of the further primary coils (PS3, PS4), said further secondary coil being inductively coupled to the at least one of the further primary coils.

7. Device according to Claim 2, wherein the first primary coil (PS1) and the second primary coil (PS2) have mutually defined inductive coupling properties, wherein the values for the relative short-circuit voltage are preferably in the range of 30% to 60%.

8. Device according to Claim 2, wherein the first primary coil (PS1) and the second primary coil (PS2) have mutually defined inductive coupling properties,
wherein a ratio of the relative short-circuit voltage between the first primary coil (PS1) and the second primary coil (PS2), on the one hand, and the relative short-circuit voltage between the secondary coil (121) and the respective primary coil (PS1 or PS2), on the other hand, is 1.5 to 3.

9. Device according to any of the preceding claims, wherein the transformer system (180, 280) has a turns ratio of at least 2.5, in particular at least between 2.5 and 5, in particular between 2.5 and 12.

10. Device according to any of the preceding claims, furthermore comprising:
at least one further switch (137, 139, 237, 239), via which one or each of the one or the plurality of further busbars is/are connectable in pairs to or is/are disconnectable in pairs from one or each other of the one or the plurality of further busbars; and/or
at least one secondary-side switch (108, 208), via which one or a plurality of the secondary coils of the secondary coil system is/are connectable to the converter system or is/are disconnectable from the converter system.

11. Device according to any of the preceding claims, furthermore comprising:
in each case a switch (105, 107, 117, 119, 205, 207, 217, 219), via which the respective busbar is connectable to the respective primary coil or is disconnectable from the respective primary coil.

12. Device according to any of the preceding claims, wherein a voltage of between 30 kV and 145 kV is able to be applied to the busbars,
wherein the transformer system (180, 280) is configured to transform to a voltage of between 150 kV and 400 kV.

13. Device according to any of the preceding claims, wherein the converter system (111, 211) comprises one or a plurality of AC-DC converters connected in parallel with a secondary busbar (109, 209), to which all the secondary coils (121, 123, 227, 231, 229, 233) are also connected.

14. Device according to any of the preceding claims, furthermore comprising:
a switch controller in order to switch switches in the case of a fault of a component and/or during partial load operation, in order to electrically isolate the faulty component and/or parts of the system from the rest of the system and/or to connect non-faulty components to one another.

15. Converter station (150, 250), comprising:
a device (170, 270) according to any of the preceding claims;
a housing (103, 203) accommodating the device;
in particular a seabed anchoring in order at sea to anchor the housing in the seabed above the water surface, or in particular a floating apparatus carrying the housing.

16. Energy providing system (100, 200), comprising:
a plurality of groups (G1, G2, G3, G4) of energy generation or consumer units;
a converter station (150, 250) according to the preceding claim,
wherein each group of energy generation or consumer units is connected (directly) to a busbar of the converter station,
wherein the voltage applied or output by the group (G1, G2, G3, G4) of energy generation or consumer units, apart from losses, is equal to the voltage applied to the busbar.

17. Device according to any of the preceding Claims 1 to 14, which is configured:
a) to regulate the AC voltage of a secondary busbar (209) with respect to magnitude and/or frequency and/or phase angle, without a further impedance taking effect between the transformer system (180, 280) and the converter system (111, 211); and/or
b) to carry out the regulation of the active power or the limiting thereof and of the reactive power by means of stipulations for each busbar (S1 to S4) or of the primary coils corresponding thereto; and/or
c) to carry out limiting valid for the entire connected active power by stipulation of the frequency of the AC voltage at the secondary busbar (109, 209) by means of the converter (111, 211).

## Revendications

1. Installation (170, 270) de préparation d'un transport de courant continu à haute tension, en particulier pour une installation en mer, comportant :
une première barre (S1) collectrice, qui peut être reliée à plusieurs premières unités de production d'énergie ou de consommateur, en particulier à des turbines (G1 ; w1_1, w1_2, ..., w1_n1) d'éoliennes ;
une deuxième barre (S2) collectrice, qui peut être reliée à plusieurs deuxièmes unités de production d'énergie ou de consommateur, en particulier à des turbines (G2 ; w2_1, w2_2, ..., w2_n2) d'éoliennes ;
un système (180, 280) à transformateur comprenant :
une première bobine (PS1) primaire, qui peut être reliée à la première barre (S1) collectrice,
une deuxième bobine (PS2) primaire, qui peut être reliée à la deuxième barre (S2) collectrice,
un système (190, 290) à bobine secondaire,
qui est couplé inductivement à la première bobine (PS1) primaire et à la deuxième bobine (PS2) primaire, pour transformer en de la tension alternative surélevée de la puissance passant sur la première et la deuxième barre (S1, S2) collectrices,
un système (111, 211) convertisseur,
qui est relié au système (190, 290) à bobine secondaire pour transformer la tension alternative surélevée en une tension continue pour le transport de courant continu à haute tension, dans lequel l'installation comporte un interrupteur (135), par lequel la première barre (S1) collectrice peut être reliée à la deuxième barre (S2) collectrice ou en être séparée, et qui est conformé de manière à ce que, dans un fonctionnement normal de l'installation, la première barre collectrice est séparée de la deuxième barre collectrice au moyen de l'interrupteur.

2. Installation suivant la revendication précédente, dans laquelle le système (190) à bobine secondaire a une bobine (121) secondaire, qui est couplée inductivement à la fois à la première bobine (PS1) primaire et à la deuxième bobine (PS2) primaire,
dans laquelle la bobine (121) secondaire est reliée au système (111) convertisseur ou peut l'être.

3. Installation suivant la revendication 1, dans laquelle le système (290) à bobines secondaires comporte :
une première bobine (227) secondaire, qui est couplée inductivement à la première bobine (PS1) primaire ;
une deuxième bobine (229) secondaire, qui est couplée inductivement à la deuxième bobine (PS2) primaire,
dans laquelle la première bobine (227) secondaire et la deuxième bobine (229) secondaire sont reliées au système (211) convertisseur ou peuvent l'être.

4. Installation suivant l'une des revendications précédentes, comportant en outre :
une ou plusieurs autres barres (S3, S4) collectrices, qui peuvent être reliées chacune à plusieurs autres unités (G3, G4) de production d'énergie ;
dans laquelle le système (180, 280) à transformateur comporte en outre :
pour chacune de la une ou des plusieurs autres barres collectrices, une autre bobine (PS3, PS4) primaire, qui peut être reliée respectivement à l'une de la une ou des plusieurs barres (S3, S4) collectrices,
dans laquelle le système (190, 290) à bobine secondaire est couplé inductivement à toutes les autres bobines primaires.

5. Installation suivant l'une des revendications précédentes, dans laquelle le système à bobines secondaires a, pour au moins deux des autres bobines (PS3, PS4) primaires, en particulier, pour respectivement deux autres bobines secondaires, exactement respectivement une autre bobine (123) secondaire, qui est couplée inductivement aux deux des autres bobines primaires.

6. Installation suivant l'une des revendications 1 à 5 précédentes, dans laquelle le système à bobines secondaires a, pour au moins une, en particulier pour chacune des autres bobines (PS3, PS4) primaires, une autre bobine (231, 233) secondaire, qui est couplée inductivement à la au moins une des autres bobines primaires.

7. Installation suivant la revendication 2, dans laquelle la première bobine (PS1) primaire et la deuxième bobine (PS2) primaire ont des propriétés de couplage inductif définies entre elles, dans laquelle les valeurs de la tension relative de court circuit sont, de préférence, dans la plage de 30 % à 60 %.

8. Installation suivant la revendication 2, dans laquelle la première bobine (PS1) primaire et la deuxième bobine (PS2) primaire ont des propriétés de couplage inductif définies entre elles,
dans laquelle un rapport de la tension relative de court circuit entre la première bobine (PS1) primaire et la deuxième bobine (PS2) primaire d'une part et la tension relative de court circuit entre la bobine (121) secondaire et la bobine (PS1 ou PS2) primaire respective d'autre part va de 1,5 à 3.

9. Installation suivant l'une des revendications précédentes, dans laquelle le système (180, 280) à transformateur a un rapport de multiplication d'au moins 2,5, en particulier au moins compris entre 2,5 et 5, en particulier entre 2,5 et 12.

10. Installation suivant l'une des revendications précédentes, comportant en outre :
au moins un autre interrupteur (137, 139, 237, 239), par lequel une ou chacune de la une ou des plusieurs autres barres collectrices peuvent être reliées ou par paires ou peuvent être séparées par paire de l'une ou de chaque autre de la une ou des plusieurs autres barres collectrices ; et/ou
au moins un interrupteur (108, 208) du côté secondaire peut être relié au système à convertisseur par la une ou les plusieurs des bobines secondaires du système à bobines secondaires ou être séparé du système convertisseur.

11. Installation suivant l'une des revendications précédentes, comportant en outre :
respectivement un interrupteur (105, 107, 117, 119, 205, 207, 217, 219), par lequel la barre collectrice respective peut être reliée à la bobine primaire respective ou être séparée de la bobine primaire respective.

12. Installation suivant l'une des revendications précédentes, dans laquelle une tension allant de 30 kV jusqu'à 145 kV peut être appliquée aux barres collectrices,
dans laquelle le système (180, 280) à transformateur est constitué pour transformer à une tension allant de 150 kV à 400 kV.

13. Installation suivant l'une des revendications précédentes, dans laquelle le système (111, 211) de convertisseur a un ou plusieurs convertisseurs courant alternatif - courant continu, qui sont montés en parallèle avec une barre (109, 209) collectrice secondaire, à laquelle également toutes les bobines (121, 123, 227, 231, 229, 233) secondaires sont reliées.

14. Installation suivant l'une des revendications précédentes, comportant en outre :
une commande d'interrupteur pour mettre en circuit un interrupteur en cas de défaut d'un composant et/ou en fonctionnement en charge partielle, afin de séparer électriquement les composants et/ou les parties du système défectueuses du reste du système et/ou afin de relier entre eux des composants, qui ne sont pas défectueux.

15. Poste (150, 250) de convertisseur, comportant :
une installation (170, 270) suivant l'une des revendications précédentes ;
un enveloppe (103, 203), dans laquelle l'installation est reçue, notamment un ancrage au fond de la mer, pour ancrer sur mer dans le fond de la mer, l'enveloppe au-dessus de la surface de l'eau ou, en particulier un appareil flottant, qui porte l'enveloppe.

16. Système (100, 200) de préparation d'énergie, comportant :
plusieurs groupes (G1, G2, G3, G4) d'unités de production d'énergie ou de consommateurs ;
un poste (150, 250) de convertisseur suivant la revendication précédente,
dans lequel chaque groupe d'unités de production d'énergie ou de consommateur est relié (directement) à une barre collectrice du poste de convertisseur,
dans lequel la tension s'appliquant ou donnée par le groupe (G1, G2, G3, G4) des unités de production d'énergie ou de consommateur est, à l'exception des pertes, la tension qui s'applique à la barre collectrice.

17. Installation suivant l'une des revendications 1 à 14 précédentes, qui est constituée :
a) pour réguler, en valeur absolue et/ou en fréquence et/ou en position en phase, la tension alternative d'une barre (209) collectrice secondaire, sans qu'une autre impédance, entre le système (180, 280) à transformateur et le système (111, 211) à convertisseur soit efficace ; et/ou
b) pour effectuer la régulation de la puissance active ou sa limitation, ainsi que de la puissance réactive par des prescriptions pour chaque barre (S1 à S4) collectrice ou les bobines primaires correspondantes ; et/ou
c) pour effectuer une limitation valable de la puissance active d'ensemble raccordée par prescription de la fréquence de la tension alternative sur la barre (109, 209) collectrice secondaire par le convertisseur (111, 211).
